# EUROPÄISCHE PATENTSCHRIFT

(11) **EP 1 641 642 B1**
(45) Veröffentlichungstag und Bekanntmachung des Hinweises auf die Patenterteilung: **25.11.2009**
(21) Anmeldenummer: 04740078.3
(22) Anmeldetag: 18.06.2004
(51) Int. Cl.: B60H 1/00

(54) **KRAFTFAHRZEUG-KLIMAANLAGE**
AIR-CONDITIONING SYSTEM
SYSTEME DE CLIMATISATION DE VEHICULE A MOTEUR

(30) Priorität: 30.06.2003 DE 10329582; 20.02.2004 DE 102004008818
(43) Veröffentlichungstag der Anmeldung: 05.04.2006
(73) Patentinhaber: Behr GmbH & Co. KG, 70469 Stuttgart (DE)
(72) Erfinder: KIEL, Ronny, 70771 Leinfelden-Oberaichen (DE); DIEKSANDER, Wolfgang, 70794 Filderstadt (DE); LITWING, Erich, 73565 Spraitbach (DE)
(74) Vertreter: Grauel, Andreas
(86) Internationale Anmeldenummer: PCT/EP2004/006634
(87) Internationale Veröffentlichungsnummer: WO 2005/000611

(56) Entgegenhaltungen:
- DE-A- 10 147 112
- DE-A- 19 501 593
- DE-A1- 4 305 253
- FR-A- 2 765 526
- FR-A- 2 771 343
- FR-A- 2 786 134
- GB-A- 2 168 786
- US-B1- 6 695 691

## Beschreibung

Die Erfindung betrifft eine Kraftfahrzeug-Klimaanlage.

Herkömmlicherweise werden in Luftführungsgehäusen eine Mehrzahl von Klappen verwendet, welche die Luftströmung in unterschiedlichen Luftkanälen steuern. Dies ist insbesondere der Fall, wenn eine geschichtete Strömung erzeugt werden soll, wofür Kaltluft und Warmluft unter Ausbildung einer Temperaturschichtung gezielt bereichsweise gemischt und bereichsweise parallel zueinander geführt werden. Hierfür sind üblicherweise mehrere Luftkanäle entsprechend ausgebildet, wobei die Klappen in denselben und in der Regel beabstandet von einander angeordnet sind und in Abhängigkeit voneinander in der Regel einzeln angesteuert und von einem Stellmotor betätigt werden.

Ferner kann eine entsprechend unterteilt ausgebildete Klappe verwendet werden, wobei die Klappe von Trennwänden des Luftführungsgehäuses unterteilt ist, welche die Luftkanäle voneinander trennen. Eine derartige Klappe bestehend aus einzelnen, voneinander getrennt ausgebildeten Bereichen ist einfacher zu steuern, lässt jedoch noch Wünsche, insbesondere in Hinblick auf den Bauraumbedarf, offen.

Aus der FR 2 765 526 ist eine Vorrichtung zur Heizung und/oder Klimatisierung insbesondere eines Fahrzeugs bekannt, die eine Luftmischklappe aufweist, welche im Wesentlichen aus zwei über einen Winkel miteinander verbundenen ebenen Bereichen in der Art einer Schmetterlingsklappe besteht. Auf diesen Klappenflügeln sind zusätzliche Kanäle angeordnet.

Des Weiteren ist aus der DE 101 47 112 A1 eine Steuerklappe für eine Vorrichtung zum Temperieren und Belüften von Kraftfahrzeugen bekannt, wobei die Steuerklappe einen ersten Klappenflügel und einen zweiten Klappenflügel, welche um eine Achse in einem Gehäuse schwenkbar gelagert sind, aufweist. Zumindest einer Flachseite der Steuerklappe ist ein Leitelement zugeordnet, so dass zwischen der Flachseite und dem Leitelement zumindest ein Strömungsquerschnitt ausgebildet ist, durch den ein die Klappe umströmendes Medium zumindest teilweise strömen kann.

Ferner zeigt die GB 2 168 786 eine Luftverteileinrichtung für ein Luftheizgerät mit einer Verteilklappe, welche drei Klappenelemente aufweist und den Einlass eines heißen Luftstromes und eines kalten Luftstromes steuert, sowie einen Kaltluftauslass, einen Warmluftauslass und einen Heißluftauslass.

Es ist Aufgabe der Erfindung, eine verbesserte Kraftfahrzeug-Klimaanlage zur Verfügung zu stellen, wobei insbesondere die Ausnutzung des Bauraums optimiert und der Querschnitt des Kaltluftweges so wenig wie möglich verbaut werden soll.

Diese Aufgabe wird gelöst durch eine Kraftfahrzeug-Klimaanlage mit den Merkmalen des Anspruchs 1. Vorteilhafte Ausgestaltungen sind Gegenstand der Unteransprüche.

Erfindungsgemäß ist eine Klappe für ein Luftführungsgehäuse einer Kraftfahrzeug-Klimaanlage vorgesehen, wobei die Klappe zur Ermöglichung einer Luftschichtung mehrere, direkt aneinander angrenzende Bereiche aufweist, die durch Trennwände unterteilt sind, welche im Unterschied zu herkömmlichen Klappen nicht Teil des Luftführungsgehäuses sondern Teil der Klappe sind, so dass die Klappe selbst Luftkanäle ausbildet, welche in entsprechender Klappenstellung die Luft gezielt leiten und weiteren Luftkanälen zuftihren. Durch die Integration der Trennwände im Bereich der Klappe in derselben verringert sich der Bauraumbedarf, da die bei herkömmlichen Klappen vorgesehenen Trennwände entfallen können.

Die Klappe weist vorzugsweise zwei äußere Bereiche und einen dazwischenliegenden mittleren Bereich auf. Hierbei ist die Klappe bevorzugt spiegelsymmetrisch bezüglich der Mittelebene, die sich senkrecht zur Schwenkachse erstreckt, ausgebildet. Dabei ist bevorzugt der Strömungsquerschnitt der zwei äußeren Bereiche etwa so groß wie der Strömungsquerschnitt des mittleren Bereichs.

Die Klappe weist mindestens einen Bereich mit einer trommelklappenartigen Gestalt auf, d.h. in diesem Bereich ist die Außenwand der Klappe bevorzugt konzentrisch bezüglich der Schwenkachse der Klappe angeordnet.

Die Klappe weist zudern mindestens einen zur Schwenkachse hin gewölbten Bereich auf, welcher vorzugsweise ein mittlerer Bereich ist.

Mindestens zwei der unterschiedlichen Bereiche der Klappe erstrecken sich vorzugsweise unterschiedlich weit bezüglich des Umfanges derselben.

Bevorzugt weist mindestens ein Bereich der Klappe auf mindestens einer Seite ein schräg bezüglich der Schwenkachse verlaufendes Ende auf, so dass sich bei einer Drehung der Klappe der Luftdurchlass langsam öffnet. Hierbei kann dieses Ende gerade oder aber einen sonstigen, beliebigen, insbesondere bogenförmigen, Verlauf haben. Hierbei kann insbesondere auf einfache Weise eine Steuerungscharakferistik in die Gestalt der Klappe integriert werden, so dass die entsprechende Stellbewegung vereinfacht werden kann.

Zur Erhöhung der Stabilität weist die Klappe bevorzugt eine Überbrückung auf, insbesondere in einem ebenen oder wenig gewölbten Bereich, welche die Trennwände eines Bereichs miteinander verbindet. Hierbei kann die Überbrückung zwecks Erfüllung einer Leitfunktion gewölbt ausgebildet sein.

Zur Abdichtung in mindestens einer Endstellung weist die Klappe mindestens einen sich nach außen hin erstreckenden Rand auf, der in dieser Endstellung an einer entsprechenden Anlage am Luftführungsgehäuse dichtend anliegt. An diesem Rand können zusätzliche Dichtmittel, wie beispielsweise elastische Dichtelemente, vorgesehen sein.

Zur Optimierung der Dichtfunktion erstreckt sich der Rand bevorzugt über die Stirnflächen hinweg, möglichst bis zur Schwenkachse oder der entsprechenden Lagerung.

Die Klappe ist bevorzugt einstückig ausgebildet, insbesondere als ein Kunststoff-Spritzgussteil. Eine derartige Ausgestaltung ermöglicht eine kostengünstige Herstellung.

Durch die spezielle Ausgestaltung der Klappe, z.B. schräg verlaufende Enden einzelner Bereiche der Klappe, Ränder, die nach außen überstehen, eine unterschiedlich weite Erstreckung einzelner Bereiche in Bezug auf den Umfang der Klappe, in Verbindung mit einer entsprechenden Ausgestaltung des Luftführungsgehäuses vereinfacht sich die Regelung, da wesentliche Regelungscharakteristiken bereits in der Klappenform und der hiermit zusammenwirkenden Luftführungsgehäuseform enthalten sind, so dass sich die Stellbewegung vereinfacht und daher einfachere Stellmotoren und/oder einfachere Steuerungen verwendet werden können.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht eines Luftführungsgehäuses,

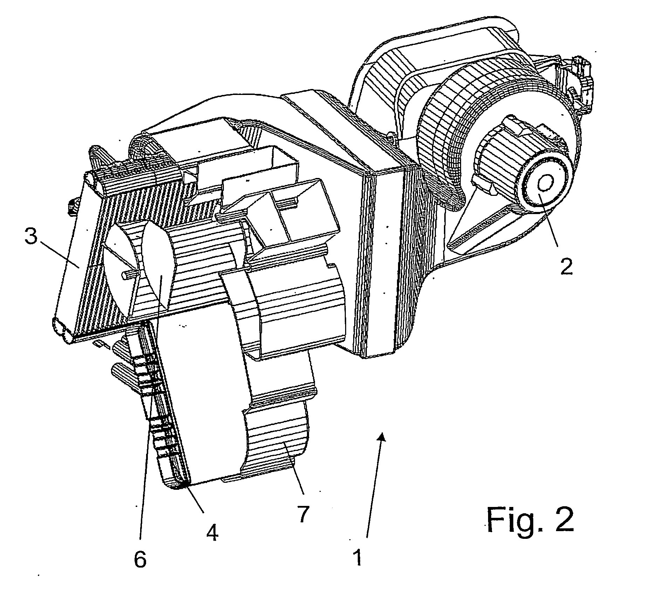

- Fig. 2: das bereichsweise aufgeschnittene Luftführungsgehäuse von Fig. 1 aus der gleichen Perspektive,
- Fig. 3: einen Schnitt durch das Luftführungsgehäuse in der Mitte der Klappe in der Klappenstellung 100% warm,
- Fig. 4: einen Schnitt durch das Luftführungsgehäuse im seitlichen Bereich der Klappe in der Klappenstellung von Fig. 3,
- Fig. 5: einen Schnitt durch das Luftführungsgehäuse in der Mitte der Klappe in der Klappenstellung 75% warm,
- Fig. 6: einen Schnitt durch das Luftführungsgehäuse im seitlichen Bereich der Klappe in der Klappenstellung von Fig. 5,
- Fig. 7: einen Schnitt durch das Luftführungsgehäuse in der Mitte der Klappe in der Klappenstellung 50% warm,
- Fig. 8: einen Schnitt durch das Luftführungsgehäuse im seitlichen Bereich der Klappe in der Klappenstellung von Fig. 7,
- Fig. 9: einen Schnitt durch das Luftführungsgehäuse in der Mitte der Klappe in der Klappenstellung 0% warm,
- Fig. 10: einen Schnitt durch das Luftführungsgehäuse im seitlichen Bereich der Klappe in der Klappenstellung von Fig. 9,
- Fig. 11: eine perspektivische Ansicht der Klappe,
- Fig. 12: die Ansicht von Fig. 11 mit Darstellung der Schnittlinien der Figuren 3 bis 10,
- Fig. 13: die Klappe aus einer anderen Perspektive, und

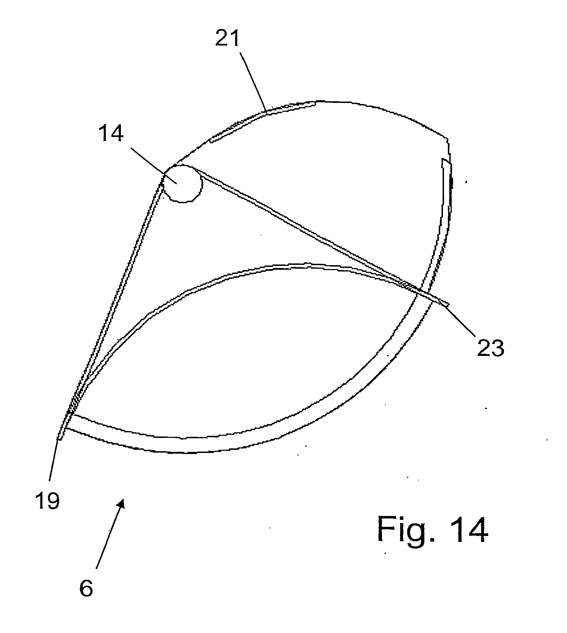

- Fig.14: einen einen Schnitt quer durch die Klappe.

Eine Kraftfahrzeug-Klimaanlage 1 mit einem Gebläse 2, einem Verdampfer 3, einem Heizer 4 und einem Zuheizer 5, die in einem mehrteilig ausgebildeten Luftführungsgehäuse 7 angeordnet sind, weist zur bedarfsgerechten Temperierung und Erzeugung einer geschichteten Luftströmung eine Misch-Klappe 6 auf.

Die temperierte Luft kann über mittels Klappen geregelter Luftkanäle verschiedenen Bereichen des Fahrzeuginnenraums zugeführt werden. So ist ein vom Luftführungsgehäuse 7 abzweigender Luftkanal 8 vorgesehen, welcher dem Entfrosten der Windschutzscheibe dient. Die durch den Defrost-Luftkanal 8 geführte Luftmenge wird mittels einer Defrost-Klappe 9 geregelt. Ein weiterer Luftkanal 10 führt zu den Seiten- und Mitteldüsen und ist mittels einer Klappe 11 regelbar. Ferner ist ein Fußraum-Luftkanal 12 vorgesehen, der mit einer Fußraum-Klappe 13 regelbar ist.

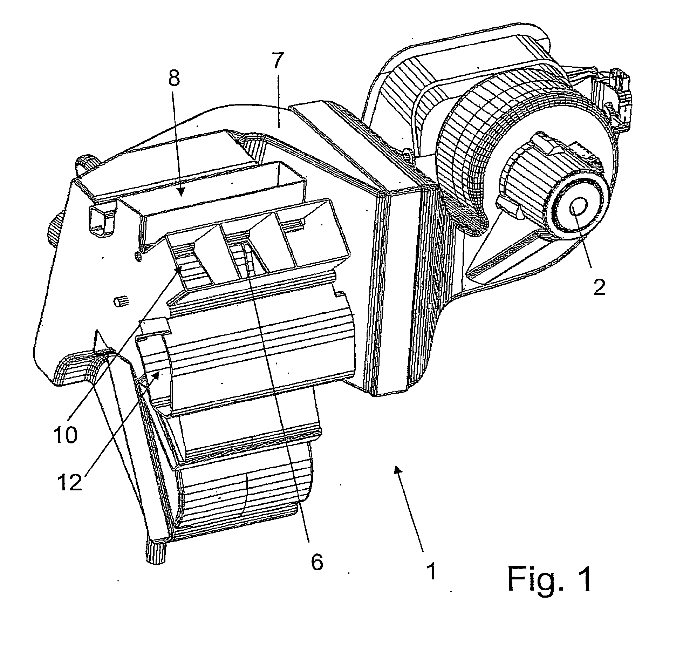

Wie aus Fig. 1 ersichtlich ist, ist der Belüftungs-Luftkanal 10 dreiteilig ausgebildet, wobei vorliegend die drei Teilkanäle jeweils etwa den gleichen Querschnitt aufweisen. Sie dienen in Zusammenwirkung mit der Klappe 6 der Luftschichtung, zwischen Mittel- und Seitendüse.

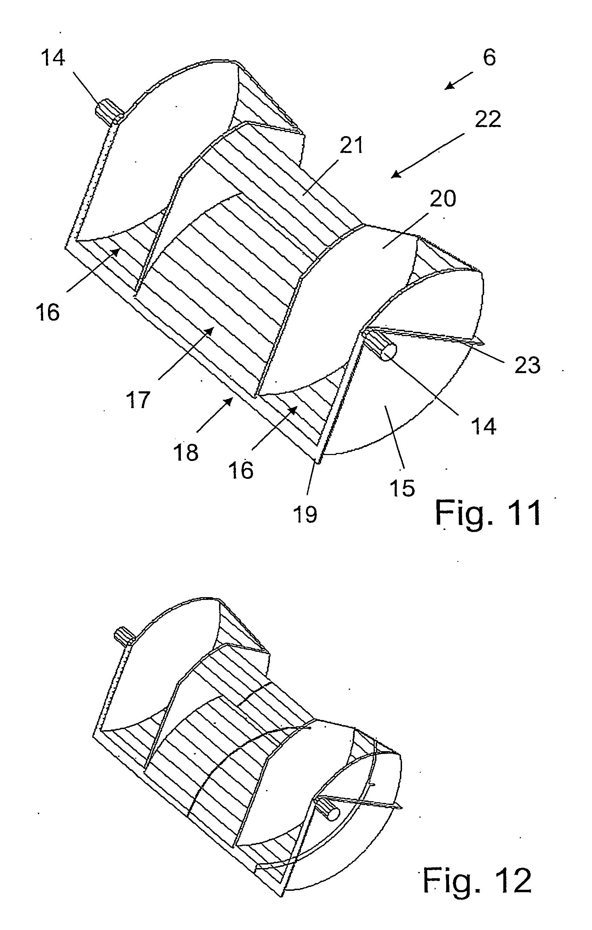

Um diese Luftschichtung durch eine einfache Klappe zu ermöglichen, die Trennwände oder speziell ausgebildete Kaltluft-Kanäle erübrigt und somit einen etwas geringeren Bauraumbedarf hat, ist die gemäß dem vorliegenden Ausführungsbeispiel dreiteilige Klappe 6 vorgesehen. Diese weist in ihrer Schwenkachse zwei Zapfen 14 auf, die an den Stirnflächen 15 angeordnet sind. Die Klappe 6 ist spiegelsymmetrisch bezüglich einer senkrecht zur Schwenkachse in der Mitte der Klappe 6 verlaufenden Ebene ausgebildet, wobei die Schnittlinien dieser Ebene mit der Klappe 6 in Fig. 12 dargestellt sind.

Die Klappe 6 weist auf Grund ihrer Symmetrie zwei äußere Bereiche 16 und einen mittleren Bereich 17 auf. Sie ist in ihren äußeren Bereichen 16 trommelklappenartig ausgebildet, d.h. die Klappe 6 hat die Gestalt eines Teils eines Hohlzylinders. Auf einer sich in Längsrichtung der Klappe 6 erstreckenden Seite 18 enden die Bereiche 16 und 17 auf gleicher Höhe, wobei zur besseren Abdichtung ein sich radial nach außen erstreckender Rand 19 vorgesehen ist, der sich auch über die Stirnflächen 15 bis zu den Zapfen 14 erstreckt. Der Strömungsquerschnitt der beiden äußeren Bereiche 16 zusammen entspricht gemäß dem vorliegenden Ausführungsbeispiel etwa dem Strömungsquerschnitt des mittleren Bereichs 17.

Der mittlere Bereich 17 ist in Richtung der Schwenkachse gewölbt bzw. konkav ausgebildet und von den seitlichen Bereichen 16 durch Wände 20 getrennt. Am schwenkachsenseitigen Ende der Wände 20 sind dieselben mittels einer Überbrückung 21 verbunden, wobei diese leicht entsprechend dem mittleren Bereich 17 gewölbt ist. Diese Überbrückung 21 dient zum Einen als eine Art Spoiler mit einer Luftleitfunktion und zum Anderen der Erhöhung der Stabilität der Klappe 6.

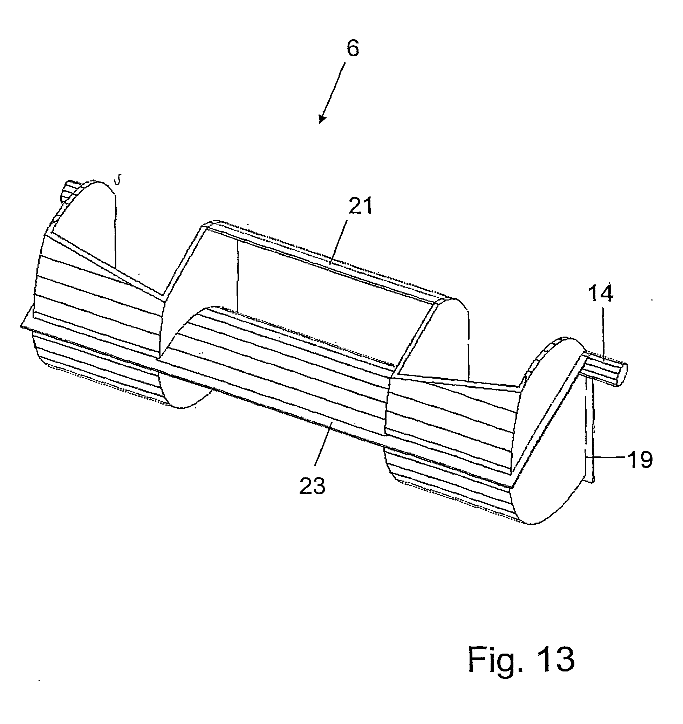

Auf der, der Seite 18 gegenüberliegenden Seite 22 der Klappe 6 enden die Bereiche 16 und 17 in unterschiedlichen Höhen, wie insbesondere aus Fig. 13 ersichtlich ist. Zur Verbesserung des Öffnungsverhaltens sind die äußeren Bereiche 16 abgeschrägt ausgebildet, d.h. sie verlaufen insbesondere nicht parallel zur Schwenkachse. Der mittlere Bereich 17 endet parallel zur Schwenkachse, wobei wiederum ein sich nach außen erstreckender Rand 23 vorgesehen ist, welcher sich auch über die Außenseite der äußeren Bereiche 16, die Stirnflächen 15 bis zu den Zapfen 14 und somit zum Rand 19 erstreckt.

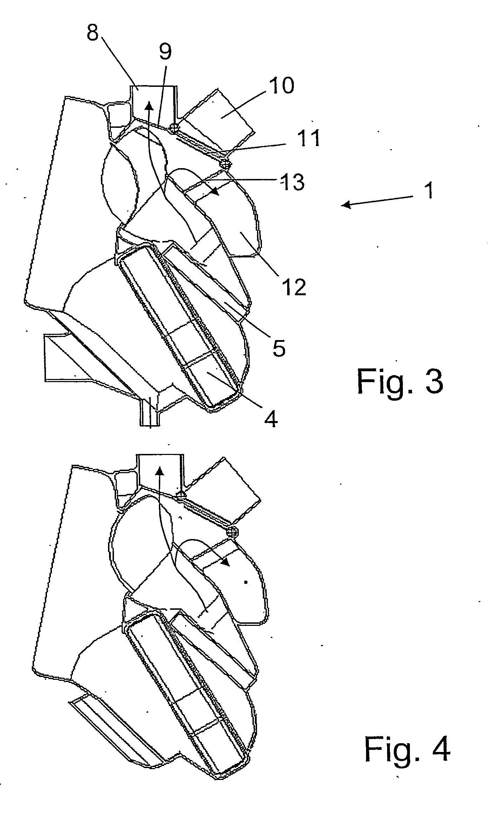

Im Folgenden wird die Funktion der Klappe 6 unter Bezugnahme auf die Figuren 3 bis 10 näher erläutert.

Die Figuren 3 und 4 zeigen die Stellung 100% warm, d.h. die Klappe 6 verschließt der direkt vom Verdampfer 3 kommenden Kaltluft den Weg mit allen Bereichen 16 und 17. Hierbei liegt die Klappe 6 mit ihrem Rand 19 am entsprechend ausgebildeten Luftführungsgehäuse 7 an, so dass keine Kaltluft zu den Luftkanälen 8 und 12 gelangen kann. Der Strömungsweg der vom Heizer 4 und Zuheizer 5 kommenden Warmluft ist für den Fall geöffneter Defrost- und Fußraum-Klappen 9 und 13 mittels durchgezogener Pfeile dargestellt. Die Klappe 11 für die Luftzufuhr zu den Seiten- und Mitteldüsen ist gemäß der Darstellung verschlossen.

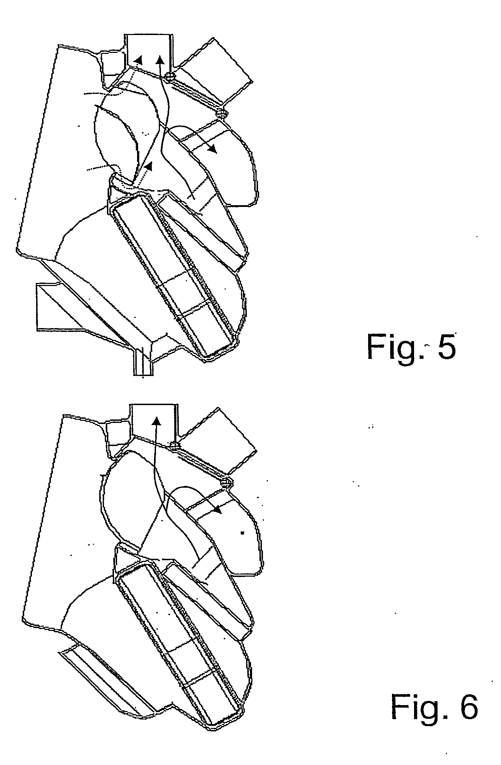

Wird die Klappe 6, wie in den Figuren 5 und 6 dargestellt, langsam in ihre andere Endstellung bewegt, so wird im mittleren Bereich 17 der Klappe 6 beidseitig ein Kaltluftdurchlass freigegeben, durch den kalte Luft insbesondere in den Defrost-Luftkanal 8 strömt. Dadurch wird erreicht, dass die Temperatur der Luft, die in den Fußraum geleitet wird, höher ist als die Temperatur der Luft, die in den Defrost-Luftkanal 8 gelangt. Auf Grund der breiter ausgebildeten äußeren Bereiche 16 ist der Kaltluftdurchlass in diesen Bereichen noch verschlossen. Der Strömungsweg der Kaltluft ist in der Zeichnung mittels gepunkteter Pfeile dargestellt.

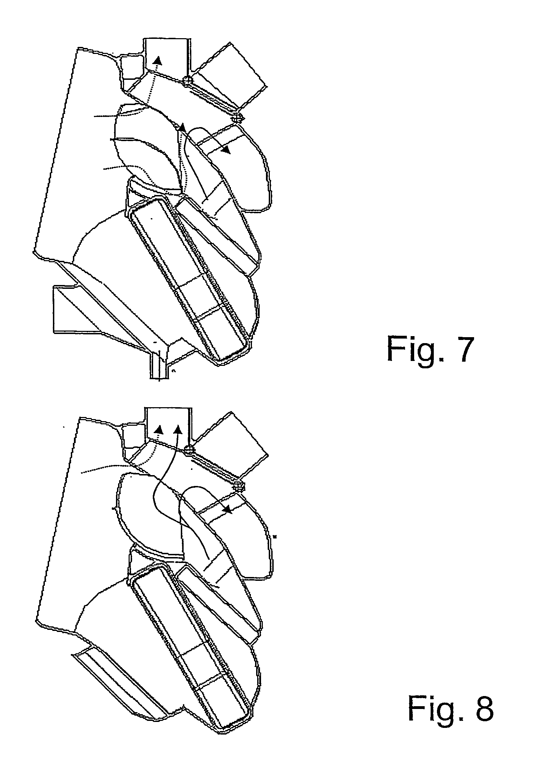

Bei einer Weiterbewegung der Klappe 6, wie in den Figuren 7 und 8 dargestellt, wird der Kaltluftdurchlass im mittleren Bereich 17 immer weiter geöffnet, so dass die Temperatur weiter absinkt. In den äußeren Bereichen 16 beginnen sich die Kaltluftdurchlässe langsam auf Grund der Schräge zu öffnen, und Kaltluft gelangt in den äußeren Bereichen 16 insbesondere zum Defrost-Luftkanal 8. Auch hier erreicht man eine für den Fahrgast als angenehm empfundene Temperaturschichtung, indem die Temperatur der Luft, die in den Fußraum geleitet wird, höher ist als die Temperatur der Luft, die in den Defrost-Luftkanal 8 gelängt.

Bei Klappenstellungen, die eine Öffnung oder zumindest teilweise Öffnung des Luftkanals 10 bewirken (in den Figuren 3 bis 8 nicht dargestellt) erhält man eine Temperaturschichtung zwischen Mittel- und Seitenluftkahälen. Durch die beschriebene Förm der Klappe 6, ist die Temperatur der Luft die der oder den Mitteldüsen zugeführt wird, niedriger als die Lufttemperatur in den Seitendüsen, was ebenfalls zu einer Komfortsteigerung im Innenraum beiträgt, da die Wärmeabstrahlung über die Seitenscheiben größer ist als in der Mitte des Fahrgastraums und es durch die beschriebene Temperaturschichtung zu einer Vergleichmäßigung, zumindest des vom Fahrgast empfundenen, Temperaturprofils kommt.

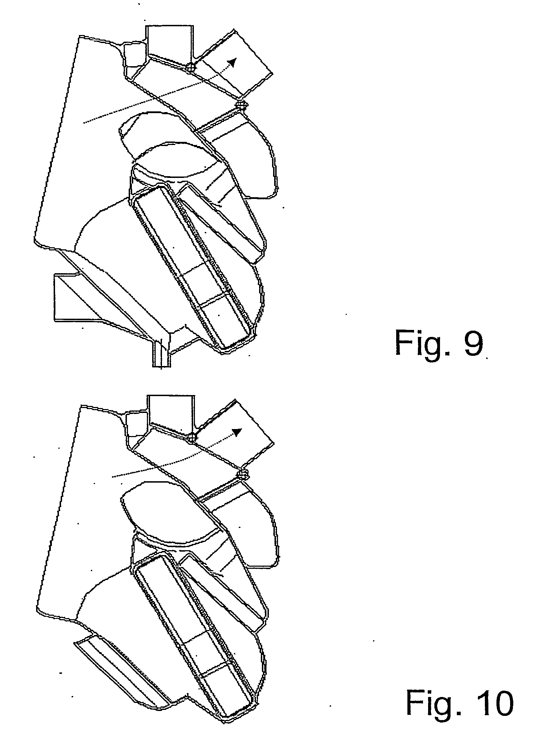

Ist der Warmluftdurchlass, wie in den Figuren 9 und 10, vollständig geschlossen, so gelangt in sämtlichen Bereichen 16 und 17 Kaltluft zu den entsprechenden Luftkanälen 8, 10 und 12. Im dargestellten Ausführungsbeispiel sind dabei sowohl der Defrost-Luftkanal 9 als auch der Luftkanal 12 in den Fußraum geschlossen und es gelangt nur gleichmäßig kalte Luft in die Kanäle 10 für Seiten- und Mitteldüsen.

Somit kann eine Schichtung der Luft ermöglicht werden, wobei in sämtlichen Misch- oder Zwischenstellungen der Klappe 6, die der Windschutzscheibe zugeführte Luft kälter als die dem Fußraum zugeführte Luft ist, bzw. die den Mitteldüsen zugeführte Luft kälter als die den Seitendüsen zugeführte Luft ist.

### Bezugszeichenliste

- 1: Kraftfahrzeug-Klimaanlage
- 2: Gebläse
- 3: Verdampfer
- 4: Heizer
- 5: Zuheizer
- 6: Klappe
- 7: Luftführungsgehäuse
- 8: Defrost-Luftkanal
- 9: Defrost-Klappe
- 10: Luftkanal
- 11: Klappe
- 12: Fußraum-Luftkanal
- 13: Fußraum-Klappe
- 14: Zapfen
- 15: Stirnflächen
- 16: äußerer Bereich
- 17: mittlerer Bereich
- 18: Seite
- 19: Rand
- 20: Wand
- 21: Überbrückung
- 22: Seite
- 23: Rand

## Patentansprüche

1. Kraftfahrzeug-Klimaanlage (1) mit einem Luftführungsgehäuse (7), einem Verdampfer (3) und einer schwenkbaren Klappe für das Luftführungsgehäuse (7), mit einem Rand (19), wobei die Klappe (6) zur Ermöglichung einer Luftschichtung und Temperierung entlang der Schwenkachse der Klappe mehrere, direkt aneinander angrenzende Bereiche (16, 17) aufweist, die durch Trennwände unterteilt sind, welche Teil der Klappe (6) sind, wobei die Klappe (6) mindestens einen Bereich (16) mit einer trommelklappenartigen Gestalt, der konzentrisch bezüglich der Schwenkachse der Klappe (6) angeordnet ist und mindestens einen zur Schwenkachse hin gewölbten Bereich (17) aufweist, **dadurch gekennzeichnet, dass** die Klappe (6) in einer Endstellung den Weg der direkt vom Verdampfer (3) kommenden Kaltluft mit allen Bereichen (16, 17) verschließt, wobei die Klappe (6) mit ihrem Rand (19) am entsprechend ausgebildeten Luftführungsgehäuse (7) anliegt.

2. Kraftfahrzeug-Klimaanlage nach Anspruch 1, **dadurch gekennzeichnet, dass** die Klappe (6) zwei äußere Bereiche (16) und einen dazwischenliegenden mittleren Bereich (17) aufweist.

3. Kraftfahrzeug-Klimaanlage nach Anspruch 1 oder 2, **dadurch gekennzeichnet, dass** die Klappe (6) spiegelsymmetrisch ausgebildet ist.

4. Kraftfahrzeug-Klimaanlage nach einem der Ansprüche 2 oder 3, **dadurch gekennzeichnet, dass** der Strömungsquerschnitt der beiden äußeren Bereiche (16) zusammen dem Strömungsquerschnitt des mittleren Bereichs (17) entspricht.

5. Kraftfahrzeug-Klimaanlage nach einem der vorhergehenden Ansprüche, **dadurch gekennzeichnet, dass** mindestens zwei der unterschiedlichen Bereiche (16, 17) der Klappe (6) sich unterschiedlich weit bezüglich des Umfanges derselben erstrecken.

6. Kraftfahrzeug-Klimaanlage nach einem der vorhergehenden Ansprüche, **dadurch gekennzeichnet, dass** mindestens ein Bereich (16) der Klappe (6) auf mindestens einer Seite (22) ein schräg bezüglich der Schwenkachse verlaufendes Ende aufweist.

7. Kraftfahrzeug-Klimaanlage nach einem der vorhergehenden Ansprüche, **dadurch gekennzeichnet, dass** die Klappe (6) eine Überbrückung (21) aufweist, welche die Trennwände eines Bereichs (17) miteinander verbindet.

8. Kraftfahrzeug-Klimaanlage nach Anspruch 7, **dadurch gekennzeichnet, dass** die Überbrückung gewölbt ausgebildet ist.

9. Kraftfahrzeug-Klimaanlage nach einem der vorhergehenden Ansprüche, **dadurch gekennzeichnet, dass** die Klappe (6) mindestens einen sich nach außen hin erstreckenden Rand (19, 23) aufweist.

10. Kraftfahrzeug-Klimaanlage nach Anspruch 9, **dadurch gekennzeichnet, dass** der Rand (19, 23) sich über die Stirnflächen (15) hinweg erstreckt.

11. Kraftfahrzeug-Klimaanlage nach einem der vorhergehenden Ansprüche, **dadurch gekennzeichnet, dass** die Klappe (6) einstückig ausgebildet ist.

12. Kraftfahrzeug-Klimaanlage nach einem der vorhergehenden Ansprüche, **dadurch gekennzeichnet, dass** die Klappe (6) ein Kunststoff-Spritzgussteil ist.

13. Kraftfahrzeug-Klimaanlage, nach einem der vorhergehenden Ansprüche, **dadurch gekennzeichnet, dass** die Klimaanlage zumindest eines der folgenden Bauteile umfasst: Wärmetauscher, Heizkörper, Filter, Temperaturmischklappe, Mischkammer, einen oder mehrere Strömungskanäle und eine oder mehrere Steuerklappen zur Verteilung der Luft auf die Austrittskanäle.

## Claims

1. Air-conditioning system (1) for a motor vehicle with an air-conduction housing (7), an evaporator (3) and a pivotal louver for the air-conduction housing (7), with an edge (19), wherein the louver (6), for enabling an air stratification and temperature control, has a plurality of regions (16, 17) along the pivot axis which are directly adjacent to one another, which are subdivided by partitions which are part of the louver (6), wherein the louver (6) has at least one region (16) with a configuration in the manner of a drum-type louver, which is arranged concentrically with respect to the pivot axis of the louver (6), and which comprises at least one region (17) curved towards the pivot axis, **characterized in that** the louver (6) closes the path of the cold air coming directly from the evaporator (3) in an end position with all regions (16, 17), wherein the louver (6) abuts the correspondingly formed air-conduction housing (7) with its edge (19).

2. Air-conditioning system for a motor vehicle as claimed in claim 1, **characterized in that** the louver (6) has two outer regions (16) and a middle region (17) lying between them.

3. Air-conditioning system for a motor vehicle as claimed in claim 1 or 2, **characterized in that** the louver (6) is designed mirror-symmetrically.

4. Air-conditioning system for a motor vehicle as claimed in either one of claims 2 and 3, **characterized in that** the flow cross section of the two outer regions (16) together corresponds to the flow cross section of the middle region (17).

5. Air-conditioning system for a motor vehicle as claimed in one of the preceding claims, **characterized in that** the at least two of the different regions (16, 17) of the louver (6) extend over a different distance with respect to the circumference of the latter.

6. Air-conditioning system for a motor vehicle as claimed in one of the preceding claims, **characterized in that** least one region (16) of the louver (6) has, on at least one side (22), an end running obliquely with respect to the pivot axis.

7. Air-conditioning system for a motor vehicle as claimed in one of the preceding claims, **characterized in that** the louver (6) has a bridge (21) which connects the partitions of a region (17) to one another.

8. Air-conditioning system for a motor vehicle as claimed claim 7, **characterized in that** the bridge is of curved design.

9. Air-conditioning system for a motor vehicle as claimed in one of the preceding claims, **characterized in that** the louver (6) has at least one outwardly extending edge (19, 23).

10. Air-conditioning system for a motor vehicle as claimed claim 9, **characterized in that** the edge (19, 23) extends beyond the end faces (15).

11. Air-conditioning system for a motor vehicle as claimed in one of the preceding claims, **characterized in that** the louver (6) is produced in one piece.

12. Air-conditioning system for a motor vehicle as claimed in one of the preceding claims, **characterized in that** the louver (6) is a plastic injection molding.

13. Air-conditioning system according to one of the preceding claims, **caharcaterized in that** the air-conditioning system comprises at least one of the following components: heat exchanger, heating body, evaporator, filter, temperature mixing louver, mixing chamber, one or more flow ducts and one or more control louvers for distributing the air to the outlet ducts.

## Revendications

1. Système de climatisation (1) d'un véhicule à moteur, comprenant un carter de guidage d'air (7), un évaporateur (3) et un volet pivotant pour le carter de guidage d'air (7), comprenant un bord (19) où le volet (6) permettant une répartition de l'air et un équilibrage de température, le long de l'axe de pivotement du volet, présente plusieurs zones (16, 17), directement contiguës entre elles, qui sont subdivisées par des parois de séparation qui font partie du volet (6), où le volet (6) présente au moins une zone (16) ayant une forme de volet à tambour, zone qui est disposée de façon concentrique par rapport à l'axe de pivotement du volet (6), et présente au moins une zone (17) bombée en direction de l'axe de pivotement, **caractérisé en ce que** le volet (6), dans une position de fin de course, obture, avec toutes les zones (16, 17), la trajectoire de l'air froid provenant directement de l'évaporateur (3), où le volet (6), par son bord (19), vient en appui sur le carter de guidage d'air (7) configuré en conséquence.

2. Système de climatisation d'un véhicule à moteur selon la revendication 1, **caractérisé en ce que** le volet (6) présente deux zones extérieures (16) et une zone centrale (17) située entre ces deux zones extérieures.

3. Système de climatisation d'un véhicule à moteur selon la revendication 1 ou 2, **caractérisé en ce que** le volet (6) est configuré de façon symétrique.

4. Système de climatisation d'un véhicule à moteur selon l'une des revendications 2 ou 3, **caractérisé en ce que** la section d'écoulement des deux zones extérieures (16), l'une avec l'autre, correspond à la section d'écoulement de la zone centrale (17).

5. Système de climatisation d'un véhicule à moteur selon l'une quelconque des revendications précédentes, **caractérisé en ce qu'**au moins deux des différentes zones (16, 17) du volet (6) s'étendent sur des longueurs différentes par rapport à la circonférence dudit volet.

6. Système de climatisation d'un véhicule à moteur selon l'une quelconque des revendications précédentes, **caractérisé en ce qu'**au moins une zone (16) du volet (6) présente, sur au moins un côté (22), une extrémité s'étendant de façon inclinée par rapport à l'axe de pivotement.

7. Système de climatisation d'un véhicule à moteur selon l'une quelconque des revendications précédentes, **caractérisé en ce que** le volet (6) présente un élément de liaison (21) qui relie entre elles les parois de séparation d'une zone (17).

8. Système de climatisation d'un véhicule à moteur selon la revendication 7, **caractérisé en ce que** l'élément de liaison est configuré de façon bombée.

9. Système de climatisation d'un véhicule à moteur selon l'une quelconque des revendications précédentes, **caractérisé en ce que** le volet (6) présente au moins un bord (19, 23) s'étendant vers l'extérieur.

10. Système de climatisation d'un véhicule à moteur selon la revendication 9, **caractérisé en ce que** le bord (19, 23) s'étend au-delà des faces frontales (15).

11. Système de climatisation d'un véhicule à moteur selon l'une quelconque des revendications précédentes, **caractérisé en ce que** le volet (6) est configuré en formant une seule et même pièce.

12. Système de climatisation d'un véhicule à moteur selon l'une quelconque des revendications précédentes, **caractérisé en ce que** le volet (6) est une pièce en matière plastique moulée par injection.

13. Système de climatisation d'un véhicule à moteur selon l'une quelconque des revendications précédentes, **caractérisé en ce que** le système de climatisation comprend au moins l'un des composants suivants : un échangeur de chaleur, un radiateur, un filtre, un volet mélangeur de température, une chambre de mélange, un ou plusieurs conduits d'écoulement et un ou plusieurs volets de commande servant à la répartition de l'air sur les conduits de sortie.
